# EUROPEAN PATENT SPECIFICATION

(11) **EP 3 785 980 B1**
(45) Date of publication and mention of the grant of the patent: **27.07.2022**
(21) Application number: 20193331.4
(22) Date of filing: 28.08.2020
(51) Int. Cl.: B60L 58/26

(54) **GROUND SUPPORT EQUIPMENT UNIT FOR USE WITH ELECTRIC AIRCRAFT**
BODENUNTERSTÜTZUNGSAUSRÜSTUNGSEINHEIT ZUR VERWENDUNG MIT ELEKTRISCHEM FLUGZEUG
UNITÉ D'ÉQUIPEMENT DE SOUTIEN AU SOL POUR AÉRONEFS ÉLECTRIQUES

(30) Priority: 30.08.2019 US 201916557842
(43) Date of publication of application: 03.03.2021
(73) Proprietor: Bell Textron Inc., Fort Worth, TX 76101 (US)
(72) Inventor: HEIRONIMUS, William Kyle, Fort Worth, TX 76101 (US)
(74) Representative: Barker Brettell LLP

(56) References cited:
- EP-A1- 3 228 546
- EP-A1- 3 467 993
- WO-A1-2013/019336
- US-A- 4 415 847

## Description

### BACKGROUND

This section is intended to provide background information to facilitate a better understanding of various technologies described herein. As the section's title implies, this is a discussion of related art. That such art is related in no way implies that it is prior art. The related art may or may not be prior art. It should therefore be understood that the statements in this section are to be read in this light, and not as admissions of prior art.

Some aircraft, such as helicopters and other rotorcraft, have traditionally utilized petroleum-based fuels to power internal combustion engines for propulsion. However, the use of such aircraft may not always be desirable for a number of reasons, such as relatively higher costs for production, maintenance and training, a relatively high risk of failure during operation, noise, and emissions.

To mitigate one or more of these issues, some electric aircraft, such as helicopters or other rotorcraft, may use one or more battery packs to power electric propulsion systems and other onboard electric components. These battery packs, though, may be relatively large in terms of weight and/or size, particularly when compared to battery packs used on aircraft utilizing petroleum-based fuels to power internal combustion engines. The weight and size of the larger battery packs can impact the overall energy efficiency of the aircraft and may also limit the available space onboard the aircraft.

WO 2013/019336 discloses a method for rapidly recharging a military or a non-military device having an electric battery is provided. The method includes recharging the military or non-military device and the recharging includes delivering coolant to the military or non-military device to cool the electric battery. A military device, a non-military non-vehicular device, a mobile charging station and a stationary charging station are also provided.

### SUMMARY

Described herein are implementations of various technologies relating to a ground support equipment unit according to claim 1, for use with electric aircraft.

In another implementation, a method may include the steps as per claim 13.

The ground support equipment (GSE) unit includes a GSE thermal loop coupled to one or more channels of a battery pack onboard an aircraft, where the GSE thermal loop is configured to allow fluid from the one or more channels to circulate therein. The GSE unit may also include a GSE thermal system coupled to the GSE thermal loop, where the GSE thermal system is configured to regulate a battery temperature of the battery pack, and where the GSE thermal system is configured to regulate the battery temperature prior to the aircraft using a cabin thermal management system to regulate a cabin temperature. The GSE unit may further include a power system configured to supply power to one or more electric components of the aircraft and configured to recharge the battery pack. The above referenced summary section is provided to introduce a selection of concepts in a simplified form that are further described below in the detailed description section. The summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Implementations of various techniques will hereafter be described with reference to the accompanying drawings. It should be understood, however, that the accompanying drawings illustrate only the various implementations described herein and are not meant to limit the scope of various techniques described herein.
Figure 1 illustrates a schematic diagram of an electric aircraft in accordance with implementations of various techniques described herein.
Figure 2 illustrates a schematic diagram of an electric aircraft having a cabin thermal management system in accordance with implementations of various techniques described herein.
Figure 3 illustrates a schematic diagram of a cabin thermal management system in thermal communication with a battery pack in accordance with implementations of various techniques described herein.
Figures 4-5 illustrate plots of cabin temperature and battery temperature over time in accordance with implementations of various techniques described herein.
Figure 6 illustrates a flow diagram of a method for using a cabin thermal management system in accordance with implementations of various techniques described herein.
Figure 7 illustrates a diagram of an electric aircraft with a ground support equipment (GSE) unit in accordance with implementations of various techniques described herein.
Figure 8 illustrates a schematic diagram of a cabin thermal management system and a battery pack with a GSE unit in accordance with implementations of various techniques described herein.
Figure 9 illustrates a schematic diagram of a GSE unit in accordance with implementations of various techniques described herein.
Figure 10 illustrates a flow diagram of a method 1000 for using a GSE unit in accordance with implementations of various techniques described herein.
Figure 11 illustrates a block diagram of a hardware configuration in which one or more various technologies described herein may be incorporated and practiced.

### DETAILED DESCRIPTION

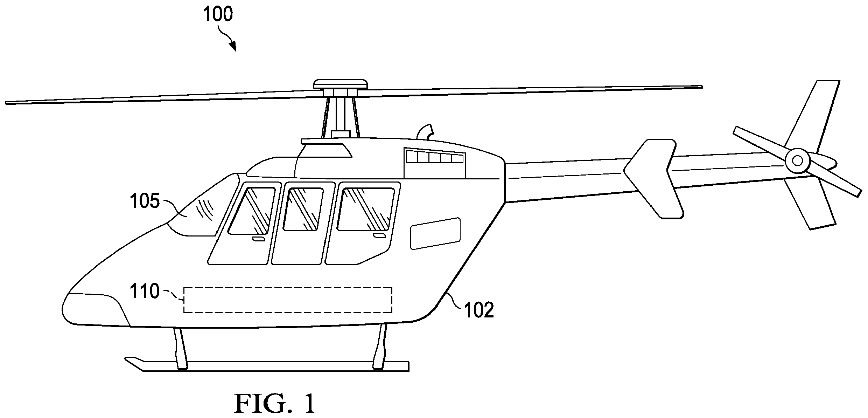

Various implementations directed to a ground support equipment unit for use with electric aircraft will now be described in the following paragraphs with reference to Figures 1-11.

As noted above, for an electric aircraft, one or more battery packs may be used to provide electric power to one or more electric propulsion systems and other onboard electric components. Such electric propulsion systems may include electrical motors, rotor systems, and/or any other components known to those skilled in the art that may be used to propel the aircraft. The term "electric aircraft" as used herein may refer to an all-electric aircraft, a hybrid aircraft, or the like. A hybrid aircraft may use multiple types of propulsion sources, at least one of which may be the electric propulsion system described above.

For example, Figure 1 illustrates a schematic diagram of an electric aircraft 100 in accordance with implementations of various techniques described herein. As shown, the aircraft 100 may include a fuselage 102, a passenger cabin 105, and a battery pack 110. The aircraft 100 as depicted in Figure 1 is a helicopter, though those skilled in the art will understand that the implementations described herein may be applied to any type of aircraft, including, but not limited to, other types of rotorcraft (e.g., gyrocopters), ultralight aircraft, vertical take-off and landing (VTOL) aircraft, sport aviation aircraft, military aircraft, general aviation aircraft, or commercial passenger aircraft. In a further implementation, the aircraft 100 may be any type of manned aircraft, where the term "manned" as used herein indicates that the aircraft 100 is configured to transport an operator and may also be configured to transport one or more other passengers. The fuselage 102 may be a central main body of the aircraft 100, where the passenger cabin 105 is disposed within the fuselage 102. The passenger cabin 105 may be configured to transport an operator and any other passengers onboard the aircraft 100.

As mentioned above, the battery pack 110 may be used to provide electric power to one or more electric propulsion systems (not shown) of the aircraft 100, and it may also be used to provide electric power to any other electric components onboard the aircraft 100. The term "battery pack" may refer to one or more individual batteries contained within a single piece or multi-piece housing, where the individual batteries are electrically interconnected to achieve a desired voltage and capacity for a particular application. The terms "battery", "cell", and "battery cell" may be used interchangeably and may refer to any of a variety of different cell types, chemistries, and configurations, including, but not limited to, lithium ion, lithium iron phosphate, lithium manganese oxide, lithium copper oxide, lithium chromium oxide, lithium cobalt oxide, lithium carbon fluoride, lithium iron disulfide, lithium ion polymer, zinc-carbon, zinc-chloride, alkaline, zinc manganese dioxide, nickel oxyhydroxide, a bio-battery, mercury oxide, zinc-air, silver-oxide, magnesium, a Zamboni pile, nickel cadmium, nickel hydrogen, nickel metal hydride, nickel zinc, silver zinc, lead-acid, a solid state battery, and any other battery type or configuration known to those skilled in the art.

The battery pack 110 may be disposed anywhere on the aircraft 100. In some implementations, the battery pack 110 may be disposed in the fuselage 102, and it may be positioned proximate to the cabin 105. For example, as shown in Figure 1, the battery pack 110 may be disposed on a floor of the fuselage 102, such that the battery pack 110 is positioned below the cabin 105. Though Figure 1 illustrates a single battery pack 110, those skilled in the art will understand that the implementations described herein may be used with an aircraft 100 having a plurality of battery packs 110. The battery pack 110 may be of any weight or size that can be accommodated by the aircraft 100. In some implementations, the battery packs 110 used by the aircraft 100 may have a total weight that is approximately equal to one third of the weight of the aircraft 100.

In addition, the battery pack 110 may be composed of one or more rechargeable batteries configured to be charged, discharged, and then recharged multiple times. The aircraft 100 may include an electric power connector (not shown), such as an electric cable with an attached electrical connector, that can be used to mechanically connect to an external power supply, where the external power supply may supply power for recharging the battery pack 110. In one implementation, the external power supply may be an independent ground power source provided within a station, aircraft hanger, and the like. In another implementation, the external power supply may be provided using ground support equipment (e.g., a ground power unit).

As is known in the art, the performance and/or lifetime of the batteries within the battery pack 110 can change depending on the temperatures at which the batteries operate or are stored. In one implementation, a battery may have a minimum operating temperature, where a battery operating below the minimum operating temperature may offer reduced power or performance to the one or more electric propulsion systems and other electric components of the aircraft 100. Further, a battery may have a maximum operating temperature, where a battery operating above the maximum operating temperature may offer reduced power or performance to the one or more electric propulsion systems and other electric components of the aircraft 100.

As such, during operation of the aircraft 100, a battery may offer normal power or performance if operating within a temperature range that is between the minimum operating temperature and the maximum operating temperature. This temperature range may hereinafter be referred to as an operating temperature range of a battery. The operating temperature range for a particular battery may depend on a number of factors, such as battery chemistry, regulations or guidelines, and the like. In one example, a battery may have an operating temperature range between about 10 degrees Celsius (i.e., a minimum operating temperature) and about 60 degrees Celsius (i.e., a maximum operating temperature).

Accordingly, one or more battery thermal systems (not shown) may be used to maintain the one or more batteries of the battery pack 110 within specified temperature ranges. In particular, as is known in the art, the battery pack 110 may use a battery thermal system to heat or cool the batteries of the battery pack 110 to a desired temperature or temperature range (e.g., the operating temperature range). The battery thermal system may be any system known to those skilled in the art. For example, the battery thermal system may be a fluid heat transfer system used to heat or cool the cells of the battery pack 110 by circulating a fluid through channels adjacent to the cells. The fluid heat transfer system is discussed in further detail below.

In this manner, various implementations described herein may include a cabin thermal management system that may be configured to transfer thermal energy between one or more battery packs of an aircraft and a passenger cabin. In particular, the cabin thermal management system may, using the battery thermal system described above, regulate an ambient temperature of the passenger cabin. In such implementations, the use of conventional heating, ventilation, and air conditioning (HVAC) systems with respect to the passenger cabin may be reduced or altogether eliminated, thereby decreasing the weight carried by the aircraft and increasing available space onboard.

### Cabin Thermal Management System

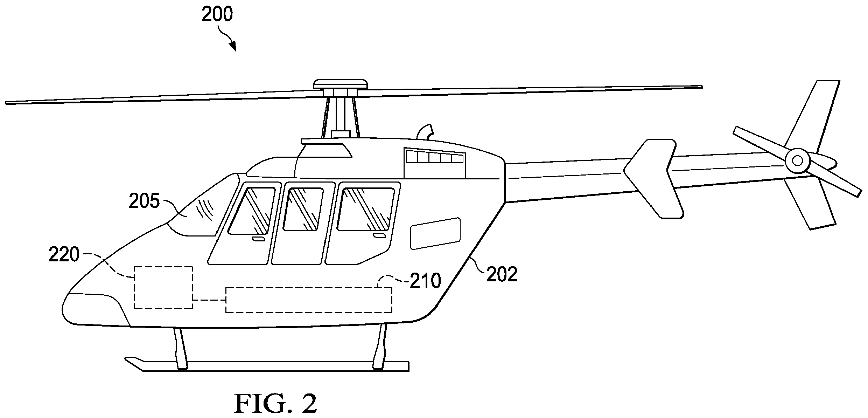

Figure 2 illustrates a schematic diagram of an electric aircraft 200 having a cabin thermal management system 220 in accordance with implementations of various techniques described herein. As shown, the aircraft 200 may include a fuselage 202, a passenger cabin 205, and a battery pack 210. The aircraft 200, the fuselage 202, the passenger cabin 205, and the battery pack 210 may be the same as the aircraft 100, the fuselage 102, the passenger cabin 105, and the battery pack 110 described above. As is also shown, the cabin thermal management system 220 may be disposed within the fuselage 202. In a further implementation, the cabin thermal management system 220 may be at least partially disposed within the passenger cabin 205.

As mentioned above, the cabin thermal management system 220 may be used to transfer thermal energy between the battery pack 210 of the aircraft 200 and the passenger cabin 205. In doing so, the cabin thermal management system 220 may be used to regulate an ambient temperature of the passenger cabin 205. An ambient temperature of a passenger cabin may hereinafter be referred to as a cabin temperature.

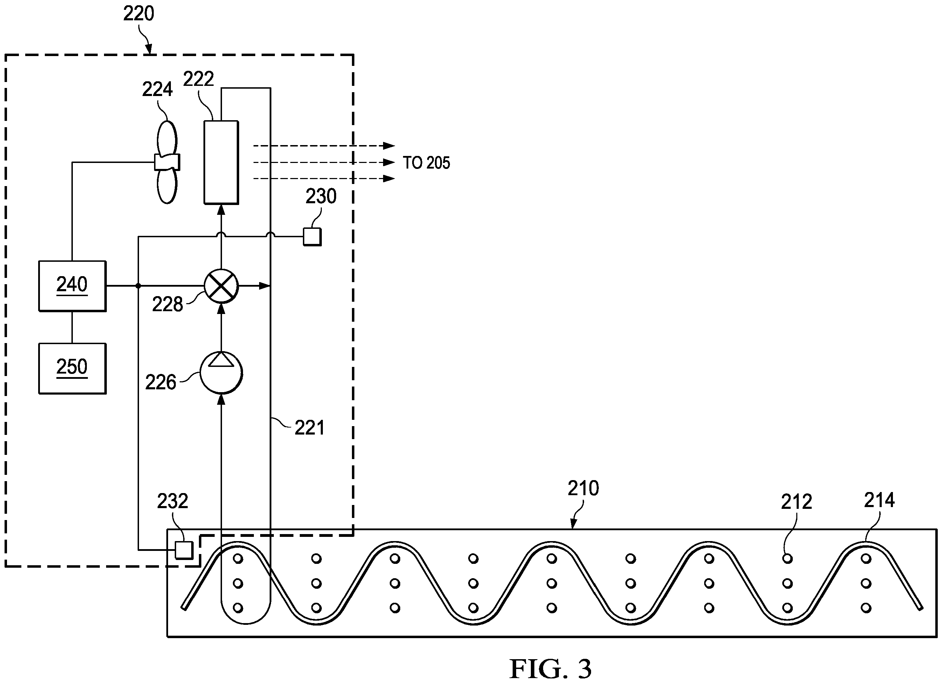

To transfer the thermal energy between the battery pack 210 and the cabin 205, the cabin thermal management system 220 may be in thermal communication with the battery pack 210. In particular, the cabin thermal management system 220 may be in thermal communication with the battery thermal system (not shown) of the battery pack 210. For example, Figure 3 illustrates a schematic diagram of a cabin thermal management system 220 in thermal communication with a battery pack 210 in accordance with implementations of various techniques described herein.

As mentioned above, both the cabin thermal management system 220 and the battery pack 210 may be disposed within the fuselage 202. In addition, one or more components (e.g., heat exchanger 222, fan 224, and the like) of the cabin thermal management system 220 may be disposed within or proximate to the passenger cabin 205 (not shown), as further described below. Additionally, the battery pack 210 may be composed of any number of cells 212 arranged in any type of configuration within the pack 210. As such, the battery pack 210 is not limited to the number and configuration of cells 212 shown in Figure 3.

As is also noted above, one or more battery thermal systems may be used to regulate the cells 212 of the battery pack 210 to a specified temperature or temperature range (e.g., an operating temperature range). The one or more battery thermal systems may be any system known to those skilled in the art. In one implementation, and as shown in Figure 3, the battery thermal system of the battery pack 210 may be a fluid heat transfer system used to heat or cool the cells 212 of the battery pack 210, such as through convective heat transfer, by circulating a fluid through one or more channels 214 adjacent to the cells 212.

The fluid may be any fluid used to regulate temperature that is known to those skilled in the art, including, but not limited to, water, glycol-based liquids (e.g., antifreeze), and/or the like. The channels 214 may be tubing that is at least partially composed of thermally conductive material, such that the tubing is configured to transfer thermal energy between the fluid contained therein and the cells 212. The channels 214 may be arranged in any configuration within the battery pack 210 that is known to those skilled in the art, and is not limited to the arrangement shown in Figure 3.

An external source (not shown) may be connected to the aircraft 200, and to the battery pack 210 in particular, in order to heat or cool the fluid within the channels 214. For example, the external source may be used to heat the fluid in the channels 214, which, in turn, may heat the cells 212 via thermal energy transfer from the fluid. In another example, the external source may be used to cool the fluid in the channels 214, which, in turn, may cool the cells 212 via thermal energy transfer from the cells 212 to the fluid. The external source may include any number of thermal components known to those skilled in the art, including, but not limited to, one or more heat exchangers, a refrigerant, an evaporator, a compressor, a positive thermal coefficient (PTC) heater, a pump to circulate the fluid, and/or any components used in a conventional HVAC system. The external source may be located only on the ground, and thus may be connected to the aircraft 200 only while the aircraft 200 is on the ground or otherwise in storage.

Accordingly, the fluid heat transfer system of the battery pack 210 may be used to regulate the temperature of the cells 212. The temperature of the cells 212 in the battery pack 210 may hereinafter be referred to as the battery temperature. In one implementation, when the aircraft 200 draws electric power from the battery pack 210, the fluid heat transfer system may be used to regulate the battery temperature to within an operating temperature range of the cells 212. In another implementation, when the aircraft 200 is in storage or is otherwise not drawing electric power from the battery pack 210, the fluid heat transfer system may be used to regulate the battery temperature to a storage temperature range. The storage temperature range may correspond to a temperature range at which the lifetime of the cells 212 may not be adversely affected over a prolonged period of time. In one example, the cells 210 may have a storage temperature range between about 10 degrees Celsius and 35 degrees Celsius.

In some implementations, the battery pack 210 may be preconditioned such that the battery temperature of the cells 212 may be regulated to a particular temperature or temperature range prior to operation of the aircraft 200, such as prior to a particular flight. For example, the battery pack 210 may be preconditioned prior to a flight such that its battery temperature is at or slightly above a minimum operating temperature. Preconditioning the battery pack 210 to such a low temperature may maximize the duration at which the battery pack 210 is operating within its operating temperature range (e.g., during a flight), as its battery temperature may increase while in operation due to the thermal energy being generated by the cells 212. For example, using the fluid heat transfer system, the battery pack 210 may be preconditioned prior to a flight such that its battery temperature is about 10 degrees Celsius. After about thirty minutes of flight time, its battery temperature may increase to about 50 degrees Celsius, at which point the aircraft 200 may land to avoid overheating the battery pack 210.

As mentioned above, to transfer the thermal energy between the battery pack 210 and the cabin 205, the cabin thermal management system 220 may be in thermal communication with the battery pack 210 described above. In particular, the cabin thermal management system 220 may use the battery pack 210, with its battery temperature regulated by the fluid heat transfer system, to serve as a heat source or a heat sink for the passenger cabin 205. The cabin thermal management system 220 can include any components known in the art that are configured to use the battery pack 210 as a heat source or a heat sink for the passenger cabin 205. As such, the cabin thermal management system 220 is not limited to components and configurations illustrated in Figure 3.

In one implementation, the cabin thermal management system 220 may include a thermal loop 221, a heat exchanger 222, a fan 224, a pump 226, a valve 228, a cabin temperature sensor 230, a battery temperature sensor 232, and a computing system 240. In some implementations, the cabin thermal management system 220 may also include a supplemental HVAC system 250, as further described below.

The thermal loop 221 may be coupled to the channels 214 of the battery pack 210, such that the fluid of the channels 214 may also circulate through the thermal loop 221. The thermal loop 221 may be composed of similar tubing used for the channels 214. The thermal loop 221 may be coupled to the pump 226, which may be used to pump the fluid through the thermal loop 221. The pump 226 may be any pump known to those skilled in the art.

The thermal loop 221 may also be coupled to the valve 228, where the valve 228 may control the amount of fluid being circulated to the heat exchanger 222 that is also coupled to the loop 221. In some instances, the valve 228 may divert some or all of the fluid from channels 214 away from the heat exchanger 222, such that the fluid returns to the battery pack 210. The valve 228 may be any valve known to those skilled in the art. The heat exchanger 222 may be used to transfer thermal energy between the passenger cabin 205 and the fluid circulating through the thermal loop 221, which allows for the heating or cooling of the passenger cabin 205. The heat exchanger 222 may be any heat exchanger known to those skilled in the art. As such, using the fluid of the thermal loop 221 and the channels 214, the heat exchanger 222 may be used to transfer the thermal energy between the cabin 205 and the battery pack 210.

The fan 224 may be used to circulate air over and/or through the heat exchanger 222 to assist with the heating or cooling of the cabin 205, where the fan 224 may be any fan known to those skilled in the art. The cabin thermal management system 220 may also include one or more ducts (not shown) to assist with the flow of heated or cooled air from the heat exchanger 222 to the cabin 205. The fluid from the heat exchanger 222 may flow back to the battery pack 210, where the fluid may circulate through the channels 214 of the pack 210.

The computing system 240 may be in communication with one or more components of the cabin thermal management system 220. In one implementation, the computing system 240 may be in communication with the valve 228 and the fan 224, such that the computing system 240 may be used to control the operations of both the valve 228 and the fan 224. The computing system 240 may also be in communication with the cabin temperature sensor 230 and the battery temperature sensor 232, such that it may receive measurements from either sensor. The cabin temperature sensor 230 may be positioned in or proximate to the cabin 205, and may be used to measure its cabin temperature. Similarly, the battery temperature sensor 232 may be positioned in or proximate to the battery pack 210, and may be used to measure its battery temperature. Any sensors known to those skilled in the art may be used for either sensor. Further, the computing system 240 may use any type of communications (e.g., wired or wireless) to communicate with the components of the cabin thermal management system 220 or any other component of the aircraft 200. In another implementation, the computing system 240 may be used by one or more other systems (e.g., electric propulsion system, etc.) onboard the aircraft 200. The computing system 240 is described in further detail in a later section.

In operation, the cabin thermal management system 220 may use the above-described components to regulate the cabin temperature of cabin 205. In particular, the cabin thermal management system 220 may use the above-described components to heat or cool the cabin 205 by transferring thermal energy between the cabin 205 and the battery pack 210. Initially, as mentioned above, the battery pack 210 may be preconditioned such that the battery temperature of the cells 212 may be regulated to a particular temperature or temperature range prior to operation of the aircraft 200, such as prior to a particular flight. For example, the battery pack 210 may be preconditioned prior to a flight such that its battery temperature is at or slightly above a minimum operating temperature.

During or after the preconditioning of the battery pack 210, the computing system 240 may receive one or more user inputs indicating that the cabin temperature of cabin 205 is to be regulated. In one implementation, the computing system 240 may receive a user input indicating that the cabin temperature is to be cooled. For example, the user input may be flipping of a switch or pressing of a button in the aircraft 200 indicating that the cabin 205 is to be cooled.

After receiving the user input, the computing system 240 may receive measurements from the cabin temperature sensor 230 and the battery temperature sensor 232. If the measurements indicate that the battery temperature is lower than the cabin temperature, then the computing system 240 may enter into a cooling mode, where it may operate the valve 228 such that fluid is circulated to the heat exchanger 222 via the thermal loop 221. Given the lower temperature of the battery temperature, the fluid may be cooler relative to the cabin 205.

As such, the heat exchanger 222 may transfer thermal energy away from the atmosphere of the cabin 205 and into the fluid, thereby cooling the atmosphere of the cabin 205. The computing system 240 may operate the fan 224 to blow air over and/or through the heat exchanger 222 to assist with the circulation of cooler air throughout the cabin 205. The fluid from the heat exchanger 222 may return to the battery pack 210 via the thermal loop 221. In such an implementation, the battery pack 210 may serve as a heat sink for the cabin 205.

However, if the measurements indicate that the battery temperature is higher than or equal to the cabin temperature, then the computing system 240 may not enter into the cooling mode described above. Instead, the computing system 240 may operate the valve 228 such that fluid does not circulate through the heat exchanger 222, and the fluid may return to the battery pack 210 from the valve 228. In such an implementation, the cabin thermal management system 220 may be unable to cool the passenger cabin 205.

In another implementation, the computing system 240 may receive a user input indicating that the cabin temperature is to be warmed. For example, the user input may be flipping of a switch or pressing of a button in the aircraft 200 indicating that the cabin 205 is to be warmed. After receiving the user input, the computing system may receive measurements from the cabin temperature sensor 230 and the battery temperature sensor 232. If the measurements indicate that the battery temperature is higher than or equal to the cabin temperature, then the computing system 240 may enter into a heating mode, where it may operate the valve 228 such that fluid is circulated to the heat exchanger 222 via the thermal loop 221. Given the higher temperature of the battery temperature, the fluid may be warmer relative to the cabin 205.

As such, the heat exchanger 222 may transfer thermal energy from the fluid to the cabin 205, thereby warming the atmosphere of the cabin 205. The computing system 240 may operate the fan 224 to blow air over and/or through the heat exchanger 222 to assist with the circulation of warmer air throughout the cabin 205. The fluid from the heat exchanger 222 may return to the battery pack 210 via the thermal loop 221. In such an implementation, the battery pack 210 may serve as a heat source for the cabin 205.

However, if the measurements indicate that the battery temperature is lower than the cabin temperature, then the computing system 240 may not enter into the heating mode described above. Instead, the computing system 240 may operate the valve 228 such that fluid does not circulate through the heat exchanger 222, and the fluid may return to the battery pack 210 from the valve 228. In such an implementation, the cabin thermal management system 220 may be unable to warm the passenger cabin 205.

Other implementations for the user inputs mentioned above may be used. In one implementation, the user input may indicate a maximum cabin temperature level, where the cabin thermal management system 220 is to cool the cabin 205 if a measurement from the cabin temperature sensor 230 indicates that the cabin temperature is higher than the maximum cabin temperature level. For example, the user input may indicate that the maximum cabin temperature level is 25 degrees Celsius. If the computing system 240 receives measurements from the cabin temperature sensor 230 indicating a cabin temperature greater than 25 degrees Celsius, then the computing system may compare measurements from the cabin temperature sensor 230 and the battery temperature sensor 232, and the computing system 240 may enter its cooling mode based on the comparison, as described above.

In a further implementation, the user input may be a minimum cabin temperature level, where the cabin thermal management system 220 is to warm the cabin 205 if a measurement from the cabin temperature sensor 230 indicates that the cabin temperature is lower than the minimum cabin temperature level. For example, the user input may indicate that the minimum cabin temperature level is 20 degrees Celsius. If the computing system 240 receives measurements from the cabin temperature sensor 230 indicating a cabin temperature lower than 20 degrees Celsius, then the computing system may compare measurements from the cabin temperature sensor 230 and the battery temperature sensor 232, and the computing system 240 may enter its heating mode based on the comparison, as described above. In another implementation, the computing system 240 may compare the cabin temperature to fluid temperature, instead of battery temperature, when determining the operation of the valve 228 for the cooling and heating operations described above.

As mentioned above, the battery pack 210 may be regulated to a particular temperature or temperature range. In one implementation, the battery pack 210 may be preconditioned or in the process of preconditioning when the cabin thermal management system 220 may begin its operation to cool or warm the cabin 205. For example, the battery pack 210 may be preconditioned prior to a flight such that its battery temperature is at or slightly above a minimum operating temperature.

In such an implementation, the aircraft 200 may be on the ground, which may allow for the cabin 205 to be warmed or cooled prior to any passengers boarding the aircraft 200. This may allow for the cabin temperature to reach a level that is comfortable for the passengers before the aircraft 200 takes off. The cabin thermal management system 220 may also continue to cool or warm the cabin 205 during flight. However, as mentioned above, the cells 212 of the battery pack 210 may generate thermal energy (i.e., heat) when in operation. As such, while the aircraft 200 is on the ground after preconditioning, the battery pack 210 may generate heat as power is being drawn from the pack 210 for the electric components onboard the aircraft 200, where such components may include the cabin thermal management system 220. Moreover, the battery pack 210 may generate even more heat during the takeoff and flight of the aircraft 200, as power may be drawn for the electric propulsion system discussed above and other components. As such, the battery temperature of the pack 210 may increase over time as the aircraft 200 is being operated.

Accordingly, while cooling or warming the cabin 205 during operation of the aircraft 200, the cabin thermal management system 220 may continuously monitor the cabin temperature and the battery temperature via the sensors 230, 232. In one implementation, while cooling the cabin 205 as described above, the computing system 240 may receive measurements indicating that the battery temperature is higher than or equal to the cabin temperature. For instance, the battery temperature may have increased over time due to power being drawn from the battery pack 210. In such an implementation, the computing system may leave its cooling mode and may operate the valve 228 such that fluid does not circulate through the heat exchanger 222, and the fluid may instead return to the battery pack 210 from the valve 228. At that point, the cabin thermal management system 220 may no longer be used to cool the passenger cabin 205. In a further implementation, the supplemental HVAC system 250 may be used to cool the cabin 205 in instances where the battery pack 210 cannot be used as a heat sink (i.e., the battery temperature is higher than the cabin temperature). The supplemental HVAC system 250 may be similar to conventional HVAC systems, but may be smaller in size and weight. The supplemental HVAC system 250 may be controlled by the computing system 240.

In implementations where the cabin thermal management system 220 is used to warm the cabin 205, the increasing battery temperature may be of use in doing so, as the battery pack 210 may serve as a heat source of increasing temperature. In some implementations, given the increasing battery temperature and the limited duration at which the cabin thermal management system 220 may cool the cabin 205, the cabin thermal management system 220 may be used primarily by aircrafts 200 used for relatively short trips (e.g., thirty minutes or less).

Once the aircraft 200 has landed, its battery pack 210 may again be preconditioned during or after its recharge, and the cabin 205 may then be warmed or cooled accordingly using the cabin thermal management system 220 prior to the next flight.

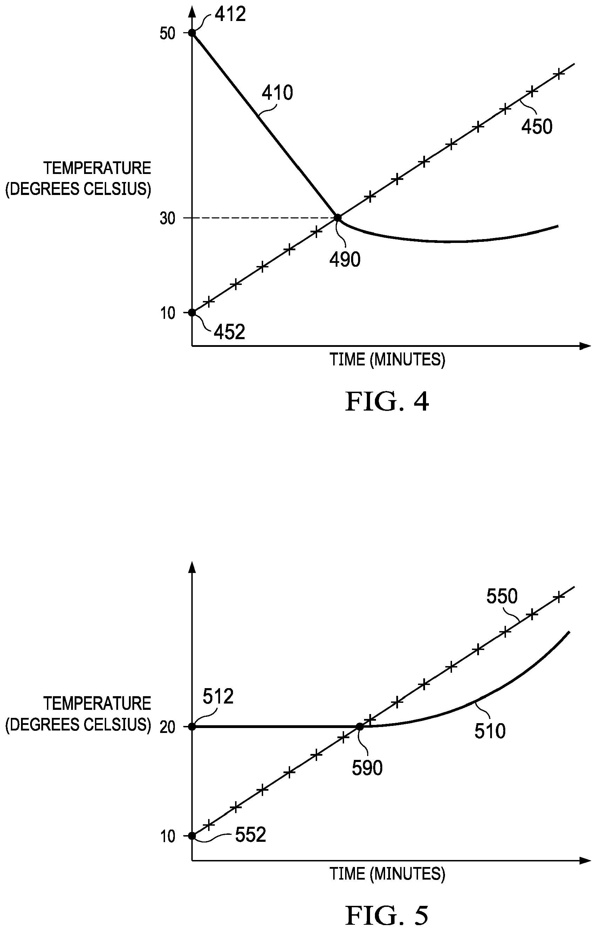

For example, Figure 4 illustrates plots of cabin temperature and battery temperature over time in accordance with implementations of various techniques described herein. In particular, plot 410 shows how cabin temperature changes over time when the cabin thermal management system 220 is used to cool the cabin 205, and plot 450 shows how battery temperature changes over time when the cabin thermal management system 220 is used to cool the cabin 205.

As shown at point 452, the battery pack 210 may be preconditioned to approximately 10 degrees Celsius, while the cabin 205 may initially have a cabin temperature of approximately 50 degrees Celsius, as shown at point 412. In addition, the measurements from sensors 230, 232 may initially show the battery temperature as being lower than the cabin temperature, so the computing system 240 may enter into a cooling mode and circulate cool air throughout the cabin 205. At that point, the battery pack 210 may serve as a heat sink for the cabin 205.

Accordingly, as shown by plot 410, the cabin temperature may decrease steadily. At the same time, as shown by plot 450, the battery temperature may increase due to power being drawn from the battery pack 210. At point 490, the computing system 240 may receive measurements indicating that the battery temperature is equal to the cabin temperature at approximately 30 degrees Celsius. The computing system may then leave its cooling mode and may operate the valve 228 such that fluid does not circulate through the heat exchanger 222. At that point, the cabin thermal management system 220 may no longer be used to cool the passenger cabin 205. As shown, the battery temperature may continue to increase, as power may continue to be drawn from the battery pack 210. The cabin temperature may no longer steadily decrease, and may plateau for some time before increasing again.

In another example, Figure 5 illustrates plots of cabin temperature and battery temperature over time in accordance with implementations of various techniques described herein. In particular, plot 510 shows how cabin temperature changes over time when the cabin thermal management system 220 is used to warm the cabin 205, and plot 550 shows how battery temperature changes over time when the cabin thermal management system 220 is used to warm the cabin 205.

As shown at point 552, the battery pack 210 may be preconditioned to approximately 10 degrees Celsius, while the cabin 205 may initially have a cabin temperature of approximately 20 degrees Celsius, as shown at point 512. In addition, the measurements from sensors 230, 232 may initially show the battery temperature as lower than the cabin temperature, so the computing system 240 may not enter into a heating mode yet.

As shown by plot 510, the cabin temperature may be relatively stable initially. At the same time, as shown by plot 550, the battery temperature may increase due to power being drawn from the battery pack 210. At point 590, the computing system 240 may receive measurements indicating that the battery temperature is equal to the cabin temperature at approximately 20 degrees Celsius. The computing system may then enter into a heating mode and may operate the valve 228 such that fluid is circulated through the heat exchanger 222. At that point, the cabin thermal management system 220 may be used to warm the passenger cabin 205. As shown, the battery temperature may continue to increase, as power may continue to be drawn from the battery pack 210. The cabin temperature may also steadily increase, as the battery pack 210 may serve as a heat source for the cabin 205.

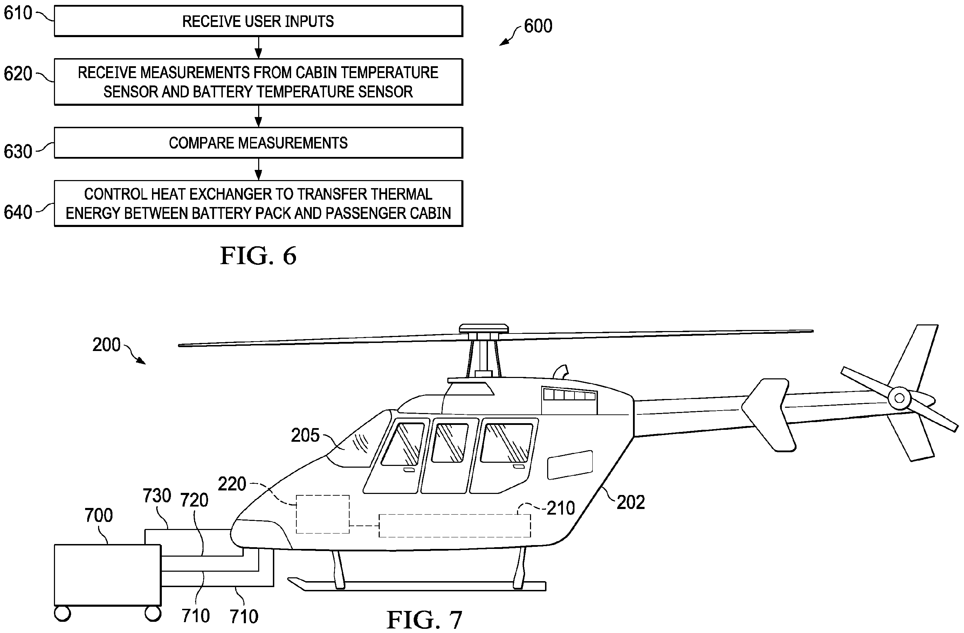

Figure 6 illustrates a flow diagram of a method 600 for using a cabin thermal management system in accordance with implementations of various techniques described herein. In one implementation, method 600 may be at least partially performed by a computing system, such as the computing system 240 discussed above. It should be understood that while method 600 indicates a particular order of execution of operations, in some implementations, certain portions of the operations might be executed in a different order. Further, in some implementations, additional operations or steps may be added to the method 600. Likewise, some operations or steps may be omitted.

At block 610, the computing system may receive one or more user inputs indicating that a cabin temperature of a passenger cabin of an aircraft is to be regulated. In one implementation, the computing system may receive a user input indicating that the cabin is to be cooled. In another implementation, the computing system may receive a user input indicating that the cabin temperature is to be warmed.

At block 620, the computing system may receive a first measurement from a cabin temperature sensor and a first measurement from a battery temperature sensor. The cabin temperature sensor may be positioned in or proximate to the cabin, and may be used to measure its cabin temperature. Similarly, the battery temperature sensor may be positioned in or proximate to a battery pack of the aircraft, and may be used to measure its battery temperature.

At block 630, the computing system may compare the first measurement from the cabin temperature sensor and the first measurement from the battery temperature sensor. At block 640, based on the comparison, the computing system may control a heat exchanger to transfer thermal energy between the battery pack and the passenger cabin. In one implementation, if the user input indicates that the cabin is to be cooled, the heat exchanger may transfer thermal energy away from the atmosphere of the cabin and into fluid circulating through the battery pack if the first measurement from the battery temperature sensor is lower than the first measurement from the cabin temperature sensor. In another implementation, if the user input indicates that the cabin is to be warmed, the heat exchanger may transfer thermal energy from the fluid to the cabin if the first measurement from the battery temperature sensor is higher than the first measurement from the cabin temperature sensor.

In some implementations, the cabin thermal management system 220 may operate the valve 228 to transfer thermal energy from the fluid in the thermal loop 221 to the cabin 205 for situations where the battery pack 210 is at risk of overheating, regardless of the cabin temperature or whether the user input indicated that the cabin is to warmed or cooled. Such implementations may be used to draw heat away from the overheating battery pack 210. In another implementation, the thermal loop 221 may be coupled to similar tubing disposed in seats of the cabin 205, thereby allowing fluid to circulate in the tubing of the seats. In such an implementation, the cabin thermal management system 220 may be used to cool or warm the seats of the cabin 205 in a similar manner as described above with respect to Figures 3-6. In yet another implementation, the thermal loop 221 may be coupled to similar tubing disposed in the clothing (helmet, flight suits, and/or the like) of an operator or passengers of the cabin 205, thereby allowing fluid to circulate in the tubing of the flight suits. In such an implementation, the cabin thermal management system 220 may be used to cool or warm the clothing in a similar manner as described above with respect to Figures 3-6.

In sum, implementations relating to a cabin thermal management system may be used to reduce or altogether eliminate the use of conventional HVAC systems by an electric aircraft, thereby decreasing the weight carried by the aircraft, increasing aircraft range, and increasing available space onboard.

### Ground Support Equipment (GSE) Unit

As mentioned above with respect to Figure 3, an external source (not shown) may be connected to the aircraft 200, and to the battery pack 210 in particular, in order to heat or cool the fluid within the channels 214. For example, the external source may be used to heat the fluid circulating in the channels 214, which, in turn, may heat the cells 212 via thermal energy transfer from the fluid. In another example, the external source may be used to cool the fluid circulating in the channels 214, which, in turn, may cool the cells 212 via thermal energy transfer from the cells 212 to the fluid. As such, this external source may be used to regulate the battery temperature of the battery pack 210.

In one implementation, the external source may be a ground support equipment (GSE) unit having components configured to heat or cool the fluid circulating within the channels 214. Accordingly, the GSE unit may be used to regulate the battery temperature of the battery pack 210, such as during a preconditioning of the battery pack 210. It also follows that, by regulating the battery temperature of the pack 210, the GSE unit may be used to regulate the cabin temperature using the cabin thermal management system 220 described above. In a further implementation, the GSE unit may also be used as an external power supply for an aircraft, as described above with respect to Figure 1, where the external power supply may supply power for recharging a battery pack on an aircraft. The GSE unit may be any type of GSE apparatus known to those skilled in the art, including a ground cart, vehicle, and the like.

For example, Figure 7 illustrates a diagram of the electric aircraft 200 with a GSE unit 700 in accordance with implementations of various techniques described herein. The GSE unit 700 may be a ground cart with wheels attached, such that the GSE unit 700 may be transported to where the aircraft 200 is parked on the ground. As shown, the GSE unit 700 may be connected to the aircraft 200 using a GSE thermal loop 710, where the GSE thermal loop 710 may be coupled to the channels 214 (not shown) of the battery pack 210. As such, the fluid of the channels 214 may circulate between the battery pack 210 and the GSE unit 700 via the GSE thermal loop 710. The GSE thermal loop 710 may be composed of similar tubing used for the channels 214.

The GSE thermal loop 710 may be connected between the aircraft 200 and the GSE unit 700 using any implementation known to those skilled in the art. For example, the outside of aircraft 200 may include fluid connectors (not shown), where the connectors are attached to tubing (not shown) internal to the aircraft 200 that extends to the battery pack 210. The GSE unit 700 may also have tubing extending from its housing, where this tubing may be configured to connect with the fluid connectors. Once the tubing of the GSE unit 700 is connected to the fluid connectors, the GSE thermal loop 710 may be formed.

The GSE unit 700 may also be connected to the aircraft 200 using an output power cable 720, where the output power cable 720 may be used to recharge the battery pack 720 and/or provide power to one or more electric components onboard the aircraft 200. The aircraft 200 may include an electric power connector (not shown), such as an electric cable with an attached electrical connector, that can be used to mechanically connect to the output power cable 720. One or more internal cables (not shown) may attach the electrical power connector with the battery pack 210 and/or any other components of the aircraft 200. Though not shown, some implementations of the GSE unit 700 may also include an input power cable configured to mechanically connect to an external power supply, where the external power supply may supply power for the GSE unit 700. In one implementation, the external power supply may be an independent ground power source provided within a station, aircraft hanger, and the like.

The GSE unit 700 may further be connected to the aircraft 200 using a data cable 730, where the data cable 730 may be used to communicate with a computing system (not shown) onboard the aircraft 200, such as the computing system 240. The data cable may be compatible with any format known to those skilled in the art, including Ethernet, Universal Serial Bus (USB), and the like. In another implementation, the GSE unit 700 may communicate with the computing system onboard the aircraft 200 using wireless communication.

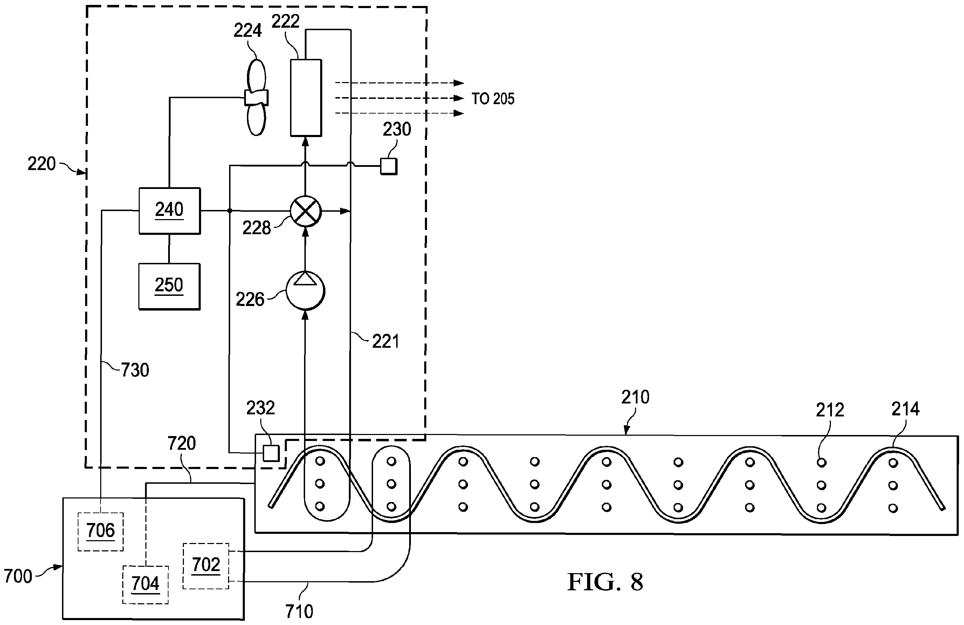

Figure 8 illustrates a schematic diagram of the cabin thermal management system 220 and the battery pack 210 with the GSE unit 700 in accordance with implementations of various techniques described herein. The GSE unit 700 may include a GSE thermal system 702, a power system 704, and a computing system 706. Those skilled in the art will understand that other configurations for the GSE unit 700 may be used with the implementations described herein.

As shown, the GSE thermal system 702 may be coupled to the battery pack 210 using the GSE thermal loop 710, such that the fluid from the channels 214 may be received by the GSE thermal system 702 via the loop 710. In one implementation, the GSE thermal system 702 may be used to warm or cool the fluid, with the fluid subsequently flowing back to the channels 214 via the loop 710 after being warmed or cooled by the GSE thermal system 702. The GSE thermal system 702 can include any components known in the art used to warm or cool the fluid and is further discussed below.

The power system 704 may be coupled to the output power cable 720, where the power cable 720 may be coupled to the battery pack 210 and/or its associated components. The power system 704 may be used to supply the power needed to recharge the battery pack 210 via the output power cable 720. In one implementation, the power system 704 may also be used to supply power to other electric systems and components onboard the aircraft 200 via the cable 720, such as the cabin thermal management system 220. As mentioned above, the power system 704 may supply its power to the aircraft 200 by connecting to an external power supply. In a further implementation, the power system 704 may include one or more batteries used to supply power to the aircraft 200.

The computing system 706 may be in communication with the computing system 240, such as through the data cable 730. The computing system 706 may communicate with the computing system 240 in order to operate one or more systems onboard the aircraft, including the cabin thermal management system 220.

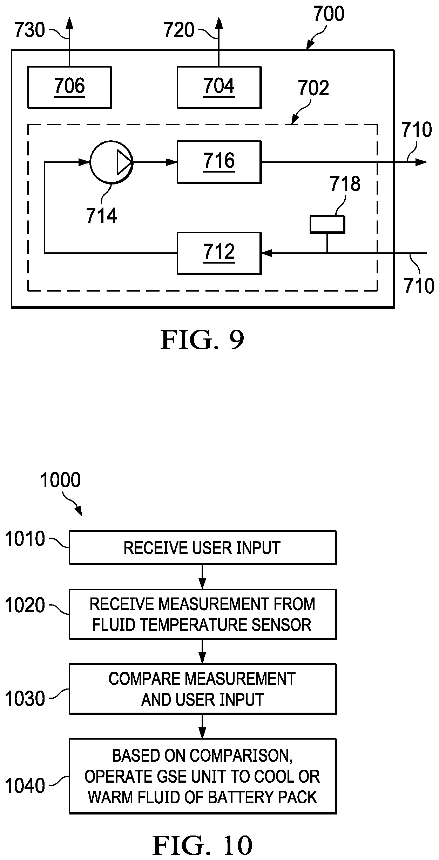

To regulate the battery temperature of the battery pack 210, thermal energy may be transferred between the GSE unit 700 and the battery pack. In particular, using the GSE thermal system 702 and the fluid from the channels 214, the GSE unit 700 may serve as a heat source or a heat sink for the battery pack 210. Figure 9 illustrates a schematic diagram of the GSE unit 700 in accordance with implementations of various techniques described herein. As mentioned above, the GSE unit 700 may include a GSE thermal system 702, a power system 704, and a computing system 706, with the GSE thermal system 702 using the GSE thermal loop 710 to circulate the fluid from the channels 214.

In one implementation, the thermal loop 710 may be coupled to a cooling element 712 within the GSE thermal system 702, where the cooling element 712 may be any implementation known in the art configured to cool the fluid circulating through the loop 710. For example, the cooling element 712 may be a heat exchanger using a refrigerant. In such an implementation, the cooling element 712 may transfer thermal energy from the fluid, thereby cooling the fluid before it returns to the battery pack 210 via the GSE thermal loop 710.

The GSE thermal loop 710 may also be coupled to a pump 714 within the GSE thermal system 702, where the pump 714 may be used to pump the fluid through the GSE thermal loop 710. The pump 714 may be any pump known to those skilled in the art.

In addition, the GSE thermal loop 710 may be coupled to a heating element 716 within the GSE thermal system 702, where the heating element 716 may be any implementation known in the art configured to warm the fluid circulating through the loop 710. For example, the heating element 716 may be a heat exchanger, a PTC heater, or the like. In such an implementation, the heating element 716 may transfer thermal energy to the fluid, thereby warming the fluid before it returns to the battery pack 210 via the GSE thermal loop 710.

In some implementations, the GSE thermal loop 710 may also be coupled to a fluid temperature sensor 718, where the fluid temperature sensor 718 may be configured to measure a temperature of the fluid from the channels 214. The temperature of the fluid may hereinafter be referred to as the fluid temperature. The fluid temperature sensor 718 may be positioned such that the temperature of the fluid may be measured prior to the fluid being cooled or warmed via the GSE thermal system 702. The sensor 718 may be any sensor known to those skilled in the art.

The computing system 706 may be in communication with one or more components of the GSE unit 700. In one implementation, the computing system 706 may be in communication with the cooling element 712, the warming element 716, and the power system 704, such that the computing system 706 may be used to control the operation of these components. The computing system 706 may also be in communication with fluid temperature sensor 718, such that it may receive measurements from the sensor. Further, the computing system 706 may use any type of communications (e.g., wired or wireless) to communicate with the components of the GSE unit 700.

In operation, the GSE unit 700 may use the above-described components to regulate the battery temperature of the battery pack 210. In particular, the GSE unit 700 may use its GSE thermal system 702 and the GSE thermal loop 710 to warm or cool the fluid circulating within the channels 214 of the battery pack 210. Further, as mentioned above, by regulating the battery temperature of the pack 210, the GSE unit 700 may be used to help regulate the cabin temperature using the cabin thermal management system 220.

Initially, with the aircraft 200 parked on the ground, the GSE unit 700 may be transported to the aircraft 200 and then connected to the aircraft 200 using the GSE thermal loop 710, the output power cable 720, and/or the data cable 730, as mentioned above. Once connected, the fluid of the channels 214 may circulate between the battery pack 210 and the GSE unit 700 via the GSE thermal loop 710. In addition, the power system 704 may be used to supply the power needed to recharge the battery pack 210 via the output power cable 720. In one implementation, the computing system 706 may communicate with the computing system 240 that the electric components onboard the aircraft 200 should draw its power from the GSE unit 700, rather than the battery pack 210. In such an implementation, the battery pack 210 may recharge to full capacity more quickly than if the pack 210 were used to supply power to the aircraft 200 during its recharge.

Further, the computing system 706 may receive a user input indicating that the aircraft 200 is to be preconditioned. In particular, the user input may indicate a target temperature or temperature range for the battery temperature of the cells 212 in the pack 210. The user input may indicate the target temperature or temperature range by flipping of a switch, pressing of a button, or entering one or more temperature values on the GSE unit 700.

In one implementation, the user input may indicate that the battery pack 210 should be preconditioned such that its cells 212 have a battery temperature that is at or slightly above a minimum operating temperature. For example, the user input may indicate that the battery pack 210 should be preconditioned to have a battery temperature of about 10 degrees Celsius. In another implementation, the user input may indicate that the battery pack 210 should be preconditioned to have a battery temperature within its storage temperature range. For example, the user input may indicate that the battery pack 210 should be preconditioned to have a battery temperature between about 10 degrees Celsius and 35 degrees Celsius.

After receiving the user input, the computing system 706 may receive one or more measurements from the fluid temperature sensor 718. If the fluid temperature measurement is different than the target temperature for the battery pack 210 or is outside of the target temperature range for the battery pack 210, then computing system 706 may operate warm or cool the fluid in the GSE thermal loop 710 using the GSE thermal system 702.

In one implementation, if the fluid temperature measurement is higher than or equal to the target temperature for the battery pack 210, then the computing system 706 may operate the cooling element 712 to cool the fluid in the GSE thermal loop 710 as it returns to the battery pack 210. The computing system 720 may continuously monitor the fluid temperature using the sensor 718, and may continue operating the cooling element 712 as described above until it receives a fluid temperature measurement that is lower than its target temperature.

In a further implementation, if the fluid temperature measurement is lower than the target temperature for the battery pack 210, then the computing system 706 may operate the heating element 716 to warm the fluid in the GSE thermal loop 710 as it returns to the battery pack 210. The computing system 720 may continuously monitor the fluid temperature using the sensor 718, and may continue operating the heating element 716 as described above until it receives a fluid temperature measurement that is higher than or equal to its target temperature.

In some implementations, the user input may indicate a target temperature range for the battery temperature of the cells 212, where the range may include minimum battery temperature and a maximum battery temperature. In such implementations, if the fluid temperature measurement is higher than or equal to the maximum battery temperature, then the computing system 706 may operate the cooling element 712 to cool the fluid in the GSE thermal loop 710, as described above. Further, if the fluid temperature measurement is lower than the minimum battery temperature, then the computing system 706 may operate the heating element 714 to warm the fluid in the GSE thermal loop 710, as described above.

In another implementation, the computing system 706 may operate the cooling element 712 or the heating element 714 based on a comparison of the target temperature or temperature range to a measurement from the battery temperature sensor 232, rather than the fluid temperature sensor 718. In such an implementation, the computing system 706 may receive the measurement from the battery temperature sensor 232 through communication with the computing system 240.

Regulating the battery temperature using the GSE unit 700, as described above, may be of use during the recharging of the battery pack 210, as the battery pack 210 may generate heat during its recharge. Further, as mentioned above, by regulating the battery temperature, the GSE unit 700 may allow for the regulation of cabin temperature of cabin 205 using the cabin thermal management system 220.

In particular, as described above with respect to Figures 2-6, the cabin thermal management system 220 may heat or cool the cabin 205 using a battery pack 210 that has been preconditioned or is in the process of preconditioning. As also noted above, the cabin thermal management system 220 may draw power from the GSE unit 700 while the unit 700 is connected to the aircraft 200, including during the preconditioning of the battery pack 210.

In one example, during preconditioning prior to a flight, the GSE unit 700 may be used to regulate the battery pack 210 to a battery temperature that is at or slightly above a minimum operating temperature (e.g., 10 degrees Celsius). Further, the computing system 240 of the cabin thermal management system 220 may receive a user input indicating that the cabin temperature of cabin 205 is to be cooled in advance of the flight. After receiving the user input, the computing system 240 may receive measurements from the cabin temperature sensor 230 and the battery temperature sensor 232. Due to preconditioning, the measurements may indicate that the battery temperature is lower than the cabin temperature. In such an example, the cabin thermal management system 220 may regulate the cabin temperature, as described above with respect to Figures 2-6, by using the battery pack 210 as a heat sink for the cabin 205.

In another example, during preconditioning while the aircraft 200 is in storage, the GSE unit 700 may be used to regulate the battery pack 210 to a target battery temperature (e.g., 25 degrees Celsius). Further, the computing system 240 of the cabin thermal management system 220 may receive a user input indicating that the cabin temperature of cabin 205 is to be warmed in advance of a flight. After receiving the user input, the computing system 240 may receive measurements from the cabin temperature sensor 230 and the battery temperature sensor 232. Due to preconditioning, the measurements may indicate that the battery temperature is higher than the cabin temperature. In such an example, the cabin thermal management system 220 may regulate the cabin temperature, as described above with respect to Figures 2-6, by using the battery pack 210 as a heat source for the cabin 205.

In one implementation, the GSE unit 700 may be configured to receive a user input indicating a target cabin temperature for the cabin 205. In such an implementation, the computing system 706 may determine the target battery temperature needed to achieve this target cabin temperature, and may operate the cooling element 712 or the heating element 714 accordingly. In such an implementation, the computing system 706 may also communicate with the computing system 240 to operate the cabin thermal management system 220 accordingly.

Figure 10 illustrates a flow diagram of a method 1000 for using a GSE unit in accordance with implementations of various techniques described herein. In one implementation, method 1000 may be at least partially performed by a computing system, such as the computing system 706 discussed above. It should be understood that while method 1000 indicates a particular order of execution of operations, in some implementations, certain portions of the operations might be executed in a different order. Further, in some implementations, additional operations or steps may be added to the method 1000. Likewise, some operations or steps may be omitted.

At block 1010, the computing system may receive a user input indicating that an aircraft 200 is to be preconditioned. In one implementation, the computing system may receive a user input that indicates a target temperature or range for a battery temperature of a battery pack onboard an aircraft. The user input may indicate the target temperature or target temperature range by flipping of a switch, pressing of a button, or entering one or more temperature values on the GSE unit.

At block 1020, the computing system may receive a measurement from a fluid temperature sensor of the GSE unit. At block 1030, the computing system may compare the measurement and the user input.

At block 1040, based on the comparison, the computing system may operate the GSE unit to warm or cool the fluid of the battery pack. In one implementation, if the fluid temperature measurement is higher than or equal to the target temperature for the battery pack, then the computing system may operate a cooling element to cool the fluid in the GSE unit. In another implementation, if the fluid temperature measurement is lower than the target temperature for the battery pack, then the computing system may operate a heating element to warm the fluid in the GSE unit.

In sum, implementations relating to a GSE unit for use with electric aircraft may be used to regulate a battery temperature of a battery pack of an aircraft to a target temperature or temperature range. By regulating the battery temperature of the battery pack, the GSE unit may be used to regulate the cabin temperature using the cabin thermal management system. Further, the GSE unit may allow the cabin thermal management system to regulate the cabin temperature without drawing power from the battery pack itself, which may lead to improved lifetime of the battery pack, less expensive energy costs to regulate the cabin temperature, and/or faster recharging times for the battery pack.

### Computing System

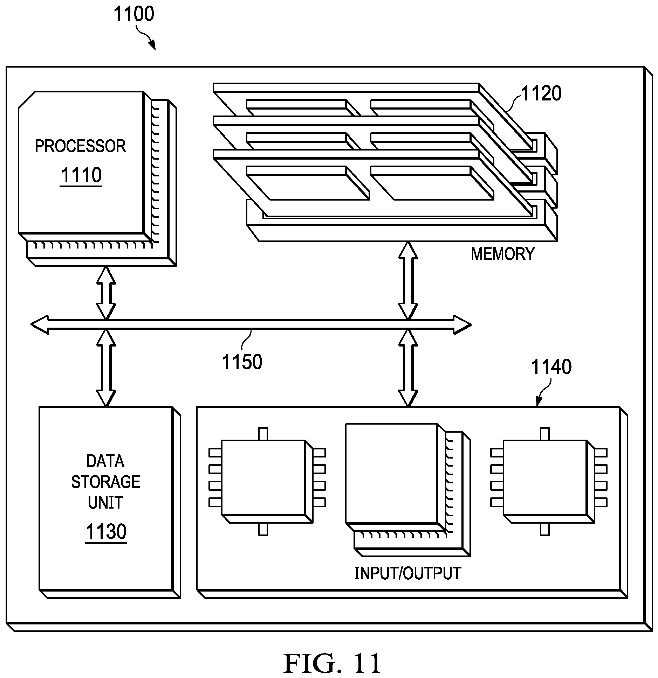

Figure 11 illustrates a block diagram of a hardware configuration 1100 in which one or more various technologies described herein may be incorporated and practiced. The hardware configuration 1100 can be used to implement the computing systems discussed above, such as the computing system 240 and the computing system 1106. The hardware configuration 1100 can include a processor 1110, a memory 1120, a storage device 1130, and an input/output device 1140. Each of the components 1110, 1120, 1130, and 1140 can, for example, be interconnected using a system bus 1150. The processor 1110 can be capable of processing instructions for execution within the hardware configuration 1100. In one implementation, the processor 1110 can be a single-threaded processor. In another implementation, the processor 1110 can be a multi-threaded processor. The processor 1110 can be capable of processing instructions stored in the memory 1120 or on the storage device 1130.

The memory 1120 can store information within the hardware configuration 1100. In one implementation, the memory 1120 can be a computer-readable medium. In one implementation, the memory 1120 can be a volatile memory unit. In another implementation, the memory 1120 can be a non-volatile memory unit.

In some implementations, the storage device 1130 can be capable of providing mass storage for the hardware configuration 1100. In one implementation, the storage device 1130 can be a computer-readable medium. In various different implementations, the storage device 1130 can, for example, include a hard disk device/drive, an optical disk device, flash memory or some other large capacity storage device. In other implementations, the storage device 1130 can be a device external to the hardware configuration 1100. Various implementations for the memory 1120 and/or the storage device 1130 are further discussed below.

The input/output device 1140 can provide input/output operations for the hardware configuration 1100. In one implementation, the input/output device 1140 can include one or more display system interfaces, sensors and/or data transfer ports.

The subject matter of this disclosure, and/or components thereof, can be realized by instructions that upon execution cause one or more processing devices to carry out the processes and functions described above. Such instructions can, for example, comprise interpreted instructions, such as script instructions, e.g., JavaScript or ECMAScript instructions, or executable code, or other instructions stored in a computer readable medium.

Implementations of the subject matter and the functional operations described in this specification can be provided in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a tangible program carrier for execution by, or to control the operation of, data processing apparatus.

A computer program (also known as a program, software, software application, script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output thereby tying the process to a particular machine, e.g., a machine programmed to perform the processes described herein. The processes and logic flows can also be performed by, and apparatus can also be implemented as, special purpose logic circuitry, e.g., an FPGA (field programmable gate array) or an ASIC (application specific integrated circuit).

Computer readable media (e.g., memory 1120 and/or the storage device 1130) suitable for storing computer program instructions and data may include all forms of non-volatile memory, media, and memory devices, including, by way of example, any semiconductor memory devices (e.g., EPROM, EEPROM, solid state memory devices, and flash memory devices); any magnetic disks (e.g., internal hard disks or removable disks); any magneto optical disks; and any CD-ROM and DVD-ROM disks. The processor and the memory can be supplemented by, or incorporated in, special purpose logic circuitry.

The discussion above is directed to certain specific implementations. It is to be understood that the discussion above is only for the purpose of enabling a person with ordinary skill in the art to make and use any subject matter defined now or later by the patent "claims" found in any issued patent herein.

It is specifically intended that the claimed invention not be limited to the implementations and illustrations contained herein, but include modified forms of those implementations including portions of the implementations and combinations of elements of different implementations as come within the scope of the following claims. It should be appreciated that in the development of any such actual implementation, as in any engineering or design project, numerous implementation-specific decisions may be made to achieve the developers' specific goals, such as compliance with system-related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure. Nothing in this application is considered critical or essential to the claimed invention unless explicitly indicated as being "critical" or "essential."

In the above detailed description, numerous specific details were set forth in order to provide a thorough understanding of the present disclosure. However, it will be apparent to one of ordinary skill in the art that the present disclosure may be practiced without these specific details. In other instances, well-known methods, procedures, components, circuits and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object or step could be termed a second object or step, and, similarly, a second object or step could be termed a first object or step, without departing from the scope of the invention. The first object or step, and the second object or step, are both objects or steps, respectively, but they are not to be considered the same object or step.

The terminology used in the description of the present disclosure herein is for the purpose of describing particular implementations only and is not intended to be limiting of the present disclosure. As used in the description of the present disclosure and the appended claims, the singular forms "a," "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components and/or groups thereof.

As used herein, the term "if' may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. As used herein, the terms "up" and "down"; "upper" and "lower"; "upwardly" and downwardly"; "below" and "above"; and other similar terms indicating relative positions above or below a given point or element may be used in connection with some implementations of various technologies described herein.

While the foregoing is directed to implementations of various technologies described herein, other and further implementations may be devised without departing from the basic scope thereof. Although the subject matter has been described in language specific to structural features and/or methodological acts, it is to be understood that the subject matter defined in the appended claims is not limited to the specific features or acts described above. Rather, the specific features and acts described above are disclosed as example forms of implementing the claims.

## Claims

1. A ground support equipment (GSE) unit (700), comprising:
a GSE thermal loop (710) to be coupled to one or more channels (214) of a battery pack (210) onboard an aircraft (200), wherein the GSE thermal loop (710) is configured to allow fluid from the one or more channels (214) to circulate therein;
a GSE thermal system (702) coupled to the GSE thermal loop (710); and
a computing system (240, 706, 1106) having a processor (1110) configured to:
regulate a battery temperature of the battery pack (210);
regulate the battery temperature prior to a flight of the aircraft (200);
regulate the battery temperature prior to the aircraft (200) using a cabin thermal management system (220) to regulate a cabin (205) temperature; and
regulate the battery temperature based a predetermined cabin (205) temperature.

2. The GSE unit (700) of claim 1, further comprising a power system (704) configured to supply power to one or more electric components of the aircraft (200) and configured to recharge the battery pack (210).

3. The GSE unit (700) of claim 2,
wherein the GSE thermal system (702) is configured to regulate a battery temperature of the battery pack (210), and wherein the GSE thermal system (702) is configured to regulate the battery temperature prior to the aircraft using a cabin thermal management system to regulate a cabin (205) temperature.

4. The GSE unit (700) of any preceding claim, wherein the GSE unit (700) is a cart configured to move to a location of the aircraft (200).

5. The GSE unit (700) of any preceding claim, wherein the GSE unit (700) is configured to serve as a heat source or a heat sink for the battery pack (210).

6. The GSE unit (700) of any preceding claim, wherein the GSE thermal system (702) comprises a pump (714) configured to pump the fluid within the GSE thermal loop (710).

7. The GSE unit (700) of any preceding claim, wherein the GSE thermal system (702) comprises:
a cooling element (224) configured to cool the fluid circulating in the GSE thermal loop (710) before the fluid flows back to the one or more channels (214); and
a heating element (716) configured to warm the fluid circulating in the GSE thermal loop (710) before the fluid flows back to the one or more channels (214).

8. The GSE unit (700) of claim 7, wherein the cooling element (224) comprises a heat exchanger (222) using a refrigerant; and/or wherein the heating element (716) comprises a heat exchanger or a positive thermal coefficient (PTC) heater.

9. The GSE unit (700) of claim 7 or 8, wherein the GSE thermal system (702) comprises a fluid temperature sensor (718) configured to measure a fluid temperature of the fluid received from the one or more channels (214).

10. The GSE unit (700) of claim 9, wherein the cooling element (224) is configured to cool the fluid circulating in the GSE thermal loop (710) if a first measurement from the fluid temperature sensor (718) is higher than or equal to a predetermined battery temperature; and/or to stop cooling the fluid circulating in the GSE thermal loop (710) if a second measurement from the fluid temperature sensor (718) is lower than the predetermined battery temperature.

11. The GSE unit (700) of claim 9 or 10, wherein the heating element (716) is configured to warm the fluid circulating in the GSE thermal loop (710) if a first measurement from the fluid temperature sensor (718) is lower than a predetermined battery temperature.

12. The GSE unit (700) of claim 11, wherein the heating element (716) is configured to stop warming the fluid circulating in the GSE thermal loop (710) if a second measurement from the fluid temperature sensor (718) is higher than or equal to the predetermined battery temperature.

13. A method, comprising:
receiving a user input at a ground support equipment (GSE) unit (700) coupled to an aircraft (200), wherein the user input indicates a predetermined battery temperature for a battery pack (210) of the aircraft (200);
receiving a first temperature measurement from a fluid temperature sensor (718) disposed in the GSE unit (700), wherein the fluid temperature sensor (718) is configured to measure a fluid temperature of fluid circulating in the battery pack (210);
comparing the predetermined battery temperature with the first temperature measurement; and
based on the comparison and further based on a predetermined cabin temperature of the aircraft (200), using a GSE thermal system (702) of the GSE unit (700) to regulate a battery temperature of the battery pack (210).

14. The method of claim 13, wherein using the GSE thermal system (702) of the GSE unit (700) to regulate the battery temperature of the battery pack (210) comprises:
using a cooling element (224) of the GSE thermal system (702) to cool the fluid if the first temperature measurement is higher than or equal to the predetermined battery temperature; or
using a heating element (716) of the GSE thermal system (702) to warm the fluid if the first temperature measurement is lower than the predetermined battery temperature.

## Patentansprüche

1. Bodenunterstützungsausrüstungs-(GSE-)Einheit (700), umfassend:
einen GSE-Thermokreislauf (710), der mit einem oder mehreren Kanälen (214) einer Batteriepackung (210) an Bord eines Flugzeugs (200) zu koppeln ist, wobei der GSE-Thermokreislauf (710) so ausgelegt ist, dass er Fluid aus dem einen oder den mehreren Kanälen (214) darin zirkulieren lässt;
ein GSE-Thermosystem (702), das mit dem GSE-Thermokreislauf (710) gekoppelt ist; und
ein Datenverarbeitungssystem (240, 706, 1106) mit einem Prozessor (1110), der konfiguriert ist zum:
Regeln einer Batterietemperatur der Batteriepackung (210);
Regeln der Batterietemperatur vor einem Flug des Flugzeugs (200);
Regeln einer Batterietemperatur, bevor das Flugzeug (200) ein Kabinen-Thermomanagementsystem (220) zum Regeln einer Temperatur einer Kabine (205) verwendet;
Regeln der Batterietemperatur basierend auf einer vorbestimmten Temperatur einer Kabine (205).

2. GSE-Einheit (700) nach Anspruch 1, ferner umfassend ein Stromversorgungssystem (704), das zum Versorgen einer oder mehrerer elektrische Komponenten des Flugzeugs (200) mit Strom ausgelegt ist und zum Wiederaufladen der Batteriepackung (210) ausgelegt ist.

3. GSE-Einheit (700) nach Anspruch 2,
wobei das GSE-Thermosystem (702) zum Regeln einer Batterietemperatur der Batteriepackung (210) ausgelegt ist, und wobei das GSE-Thermosystem (702) so ausgelegt ist, dass es die Batterietemperatur regelt, bevor das Flugzeug ein Kabinen-Thermomanagementsystem zum Regeln einer Temperatur einer Kabine (205) verwendet.

4. GSE-Einheit (700) nach einem der vorhergehenden Ansprüche, wobei die GSE-Einheit (700) ein Wagen ist, der ausgelegt ist, um zu einem Standort des Flugzeugs (200) bewegt zu werden.

5. GSE-Einheit (700) nach einem der vorhergehenden Ansprüche, wobei die GSE-Einheit (700) so ausgelegt ist, dass sie als eine Wärmequelle oder Wärmesenke für die Batteriepackung (210) dient.

6. GSE-Einheit (700) nach einem der vorhergehenden Ansprüche, wobei das GSE-Thermosystem (702) eine Pumpe (714) umfasst, die zum Pumpen des Fluids innerhalb des GSE-Thermokreislaufs (710) ausgelegt ist.

7. GSE-Einheit (700) nach einem der vorhergehenden Ansprüche, wobei das GSE-Thermosystem (702) umfasst:
ein Kühlelement (224), das so ausgelegt ist, dass es das im GSE-Thermokreislauf (710) zirkulierende Fluid abkühlt, bevor das Fluid in den einen oder die mehreren Kanäle (214) zurückströmt; und
ein Heizelement (716), das so ausgelegt ist, dass es das im GSE-Thermokreislauf (710) zirkulierende Fluid erwärmt, bevor das Fluid in den einen oder die mehreren Kanäle (214) zurückströmt.

8. GSE-Einheit (700) nach Anspruch 7, wobei das Kühlelement (224) einen Wärmetauscher (222) umfasst, der ein Kühlmittel verwendet; und/oder wobei das Heizelement (716) einen Wärmetauscher oder eine Heizung mit positivem Temperaturkoeffizienten (PTC) umfasst.

9. GSE-Einheit (700) nach Anspruch 7 oder 8, wobei das GSE-Thermosystem (702) einen Fluidtemperatursensor (718) umfasst, der zum Messen einer Fluidtemperatur des Fluids ausgelegt ist, das von dem einen oder den mehreren Kanälen (214) empfangen wird.

10. GSE-Einheit (700) nach Anspruch 9, wobei das Kühlelement (224) so ausgelegt ist, dass es das im GSE-Thermokreislauf (710) zirkulierende Fluid abkühlt, wenn eine erste Messung vom Fluidtemperatursensor (718) höher als oder gleich wie eine vorbestimmte Batterietemperatur ist; und/oder Kühlung des im GSE-Thermokreislauf (710) zirkulierenden Fluids stoppt, wenn eine zweite Messung vom Fluidtemperatursensor (718) niedriger als die vorbestimmte Batterietemperatur ist.

11. GSE-Einheit (700) nach Anspruch 9 oder 10, wobei das Heizelement (716) so ausgelegt ist, dass es das im GSE-Thermokreislauf (710) zirkulierende Fluid erwärmt, wenn eine erste Messung vom Fluidtemperatursensor (718) niedriger als eine vorbestimmte Batterietemperatur ist.

12. GSE-Einheit (700) nach Anspruch 11, wobei das Heizelement (716) so ausgelegt ist, dass es Erwärmung des im GSE-Thermokreislauf (710) zirkulierenden Fluids stoppt, wenn eine zweite Messung vom Fluidtemperatursensor (718) höher als oder gleich eine vorbestimmte Batterietemperatur ist.

13. Verfahren, umfassend:
Empfangen einer Benutzereingabe an einer Bodenunterstützungsausrüstungs-(GSE-)Einheit (700), die mit einem Flugzeug (200) gekoppelt wird, wobei die Benutzereingabe eine vorbestimmte Batterietemperatur für eine Batteriepackung (210) des Flugzeugs (200) anzeigt;
Empfangen einer ersten Temperaturmessung von einem Fluidtemperatursensor (718), der in der GSE-Einheit (700) angeordnet ist, wobei der Fluidtemperatursensor (718) zum Messen einer Fluidtemperatur von Fluid ausgelegt ist, das in der Batteriepackung (210) zirkuliert;
Vergleichen der vorbestimmten Batterietemperatur mit der ersten Temperaturmessung; und
Verwenden eines GSE-Thermosystems (702) der GSE-Einheit (700) zum Regeln einer Batterietemperatur der Batteriepackung (210) basierend auf dem Vergleich und ferner basierend auf einer vorbestimmten Kabinentemperatur des Flugzeugs (200).

14. Verfahren nach Anspruch 13, wobei das Verwenden des GSE-Thermosystems (702) der GSE-Einheit (700) zum Regeln der Batterietemperatur der Batteriepackung (210) umfasst:
Verwenden eines Kühlelements (224) des GSE-Thermosystems (702) zum Abkühlen des Fluids, wenn die erste Temperaturmessung höher als oder gleich wie die vorbestimmte Batterietemperatur ist; oder
Verwenden eines Heizelements (716) des GSE-Thermosystems (702) zum Erwärmen des Fluids, wenn die erste Temperaturmessung niedriger als die vorbestimmte Batterietemperatur ist.

## Revendications

1. Unité d'équipement de soutien au sol (GSE) (700), comprenant :
une boucle thermique GSE (710) destinée à être couplée à un ou plusieurs canaux (214) d'un bloc de batteries (210) à bord d'un aéronef (200), la boucle thermique GSE (710) étant configurée pour permettre au fluide provenant du ou des canaux (214) de circuler à l'intérieur ;
un système thermique GSE (702) couplé à la boucle thermique GSE (710) ; et
un système informatique (240, 706, 1106) ayant un processeur (1110) configuré pour :
réguler une température de batterie du bloc de batteries (210) ;
réguler la température de batterie avant un vol de l'aéronef (200) ;
réguler la température de batterie avant que l'aéronef (200) n'utilise un système de gestion thermique de cabine (220) pour réguler la température d'une cabine (205) ; et
réguler la température de batterie sur la base d'une température de cabine (205) prédéterminée.

2. Unité GSE (700) selon la revendication 1, comprenant en outre un système d'alimentation (704) configuré pour fournir de l'énergie à un ou plusieurs composants électriques de l'aéronef (200) et configuré pour recharger le bloc de batteries (210).

3. Unité GSE (700) selon la revendication 2,
le système thermique GSE (702) étant configuré pour réguler une température de batterie du bloc de batteries (210), et le système thermique GSE (702) étant configuré pour réguler la température de batterie avant que l'aéronef n'utilise un système de gestion thermique de cabine pour réguler une température de cabine (205).

4. Unité GSE (700) selon n'importe quelle revendication précédente, l'unité GSE (700) étant un chariot configuré pour se déplacer à un emplacement de l'aéronef (200).

5. Unité GSE (700) selon n'importe quelle revendication précédente, l'unité GSE (700) étant configurée pour servir de source de chaleur ou de dissipateur de chaleur pour le bloc de batteries (210).

6. Unité GSE (700) selon n'importe quelle revendication précédente, le système thermique GSE (702) comprenant une pompe (714) configurée pour pomper le fluide à l'intérieur de la boucle thermique GSE (710).

7. Unité GSE (700) selon n'importe quelle revendication précédente, le système thermique GSE (702) comprenant :
un élément de refroidissement (224) configuré pour refroidir le fluide circulant dans la boucle thermique GSE (710) avant que le fluide ne revienne au ou aux canaux (214) ; et
un élément de chauffage (716) configuré pour chauffer le fluide circulant dans la boucle thermique GSE (710) avant que le fluide ne revienne au ou aux canaux (214).

8. Unité GSE (700) selon la revendication 7, l'élément de refroidissement (224) comprenant un échangeur de chaleur (222) utilisant un réfrigérant ; et/ou l'élément de chauffage (716) comprenant un échangeur de chaleur ou un dispositif de chauffage à coefficient thermique positif (CTP).

9. Unité GSE (700) selon la revendication 7 ou 8, le système thermique GSE (702) comprenant un capteur de température de fluide (718) configuré pour mesurer une température de fluide du fluide reçu en provenance du ou des canaux (214).

10. Unité GSE (700) selon la revendication 9, l'élément de refroidissement (224) étant configuré pour refroidir le fluide circulant dans la boucle thermique GSE (710) si une première mesure provenant du capteur de température de fluide (718) est supérieure ou égale à une température de batterie prédéterminée ; et/ou pour arrêter le refroidissement du fluide circulant dans la boucle thermique GSE (710) si une seconde mesure provenant du capteur de température de fluide (718) est inférieure à la température de batterie prédéterminée.

11. Unité GSE (700) selon la revendication 9 ou 10, l'élément de chauffage (716) étant configuré pour chauffer le fluide circulant dans la boucle thermique GSE (710) si une première mesure provenant du capteur de température de fluide (718) est inférieure à une température de batterie prédéterminée.

12. Unité GSE (700) selon la revendication 11, l'élément de chauffage (716) étant configuré pour arrêter de chauffer le fluide circulant dans la boucle thermique GSE (710) si une seconde mesure provenant du capteur de température de fluide (718) est supérieure ou égale à la température de batterie prédéterminée.

13. Procédé, comprenant :
la réception d'une entrée utilisateur au niveau d'une unité d'équipement de soutien au sol (GSE) (700) couplée à un aéronef (200), l'entrée utilisateur indiquant une température de batterie prédéterminée pour un bloc de batterie (210) de l'aéronef (200) ;
la réception d'une première mesure de température provenant d'un capteur de température de fluide (718) disposé dans l'unité GSE (700), le capteur de température de fluide (718) étant configuré pour mesurer une température de fluide du fluide circulant dans le bloc de batteries (210) ;
la comparaison de la température de batterie prédéterminée avec la première mesure de température ; et
sur la base de la comparaison et en outre sur la base d'une température de cabine prédéterminée de l'aéronef (200), l'utilisation d'un système thermique GSE (702) de l'unité GSE (700) pour réguler une température de batterie du bloc de batteries (210).

14. Procédé selon la revendication 13, l'utilisation du système thermique GSE (702) de l'unité GSE (700) pour réguler la température de batterie du bloc de batteries (210) comprenant :
l'utilisation d'un élément de refroidissement (224) du système thermique GSE (702) pour refroidir le fluide si la première mesure de température est supérieure ou égale à la température de batterie prédéterminée ; ou
l'utilisation d'un élément de chauffage (716) du système thermique GSE (702) pour chauffer le fluide si la première mesure de température est inférieure à la température de batterie prédéterminée.
